# EUROPEAN PATENT SPECIFICATION

(11) **EP 2 737 805 B1**
(45) Date of publication and mention of the grant of the patent: **06.09.2017**
(21) Application number: 12820706.5
(22) Date of filing: 19.07.2012
(51) Int. Cl.: A23G 1/30, A23G 3/50, A23L 7/122, A23L 7/161, A23G 1/50, A23G 3/54

(54) **CHOCOLATE-IMPREGNATED CONFECTION**
MIT SCHOKOLADE ÜBERZOGENES KONFEKT
FRIANDISE IMPRÉGNÉE DE CHOCOLAT

(30) Priority: 29.07.2011 JP 2011167713
(43) Date of publication of application: 04.06.2014
(73) Proprietor: Lotte Co., Ltd., Tokyo 160-0023 (JP)
(72) Inventor: IGARASHI, Takuma, Saitama-shi Saitama 336-8601 (JP); TADOKORO, Keiji, Saitama-shi Saitama 336-8601 (JP); KOYAMA, Toshiyuki, Saitama-shi Saitama 336-8601 (JP); ASHITANI, Hiroaki, Saitama-shi Saitama 336-8601 (JP)
(74) Representative: Witte, Weller & Partner Patentanwälte mbB
(86) International application number: PCT/JP2012/068389
(87) International publication number: WO 2013/018557

(56) References cited:
- EP-A1- 0 941 665
- WO-A1-01/78519
- WO-A1-2010/114026
- WO-A1-2010/114026
- WO-A2-2008/028112
- JP-A- 6 209 711
- JP-A- 11 225 674
- JP-A- 2004 254 529
- JP-A- 2004 290 073
- JP-A- 2004 290 073
- DATABASE GNPD [Online] MINTEL; May 2011 (2011-05), Anonymous: "Total Choco Breakfast Cereal", XP002735839, retrieved from www.gnpd.com Database accession no. 1545911

## Description

### TECHNICAL FIELD

The present invention relates to a chocolate-impregnated confectionery product and, particularly, to a chocolate confectionery product having an eating texture intrinsic to a confectionery base thereof as well as mild taste of chocolate.

### BACKGROUND ART

The chocolate confectionery market shifts its product trend from simple chocolate products to so-called composite chocolate products. The term "composite chocolate product" means a processed chocolate product containing less than 60% of chocolate as specified by the Chocolate Standards. Examples of the composite chocolate product include combinations of chocolate and baked confectionery such as biscuit and baked snack, and combinations of chocolate and puffed confectionery such as puffed cereals. The composite chocolate products have lighter and milder eating texture than the simple chocolate products and, therefore, are widely accepted by consumers. However, the consumers seem to expect not only light eating texture but also mild taste of chocolate. With such tendency, chocolate-impregnated confectionery products gain popularity.

The term "chocolate-impregnated confectionery product" means a baked or puffed confectionery product (confectionery base) impregnated with chocolate. If a crispy eating texture intrinsic to the confectionery base is enhanced, however, the chocolate mild taste is reduced. If the chocolate mild taste is enhanced, the light eating texture of the confectionery base is impaired. This is a drawback associated with the chocolate-impregnated confectionery product.

Exemplary prior arts related to the chocolate-impregnated confectionery product include an impregnated food and an impregnated food production method disclosed in Patent Literature 1, a chocolate-impregnated food production method disclosed in Patent Literature 2, and a food impregnation method disclosed in Patent Literature 3.

### CITATION LIST

### PATENT LITERATURE

- PTL1:: JP-4673257B
- PTL2:: JP-3766661B
- PTL3:: JP-2003-174850A

From document EP 0 941 665 A1 it is known to impregnate a fat-based confectionary such as chocolate in an aerated food material by degassing the aerated food material under reduced pressure and subsequently returning the atmosphere to ordinary pressure.

Document WO 2008/028112 A2 discloses a cracker-like food product, which comprises at least two layers of baked dough, which define at least one cavity. The resulting cracker can be seasoned or filled.

Document WO 01/78519 A1 discloses a confectionary-based product, which comprises a molded shell and a mainly planar closure base portion, wherein the shell and the closure base portion define an inner cavity, which is partly occupied with a mass formed of solid edible discrete pieces.

Document JP 2004 290073 A discloses a method for producing impregnated composite confectionary at low cost, wherein the disclosed confectionary product is produced by puffing a raw material mixture from an extruder and at the same time pouring the impregnating food material into the hollow part of the hollow puffed confectionary.

### SUMMARY OF INVENTION

### PROBLEM TO BE SOLVED BY INVENTION

Previously proposed or commercialized arts related to the chocolate-impregnated confectionery product fail to satisfy the requirements for the eating texture (light eating texture) intrinsic to the confectionery base and the chocolate mild taste, thereby needing improvement.

It is therefore an object of the present invention to provide a chocolate-impregnated confectionery product including a confectionery base sufficiently impregnated with chocolate and having a light (crispy) eating texture intrinsic to the confectionery base as well as mild taste (chocolate taste).

### SOLUTION TO PROBLEM

According to an inventive aspect of claim 1 to achieve the aforementioned object, there is provided a chocolate-impregnated confectionery product, which includes a hollow base food and chocolate infiltrated in the hollow base food, wherein the chocolate is present in a weight percentage of 70 to 80 wt% of the weight of the overall confectionery product.
According to another inventive aspect of claim 1, the hollow base food has a hollow percentage of 7 to 30 %, which is defined as the ratio of the area of a cavity of the hollow base food to the area of an overall section taken by cutting a center portion of the hollow base food and surrounded by an outer peripheral edge of the section, in the chocolate-impregnated confectionery product of claim 1.

According to an inventive aspect of claim 2, the hollow base food is a hollow puffed cereal in the chocolate-impregnated confectionery product of claim 1.

### ADVANTAGEOUS EFFECTS OF INVENTION

According to the inventive aspect of claim 1, the weight percentage of the chocolate infiltrated in the hollow base food is 70 to 80 wt %. Thus, the base food is sufficiently impregnated with the chocolate, and the chocolate partly penetrates into a hollow portion of the base food (a center cavity of the base food). Therefore, the chocolate-impregnated confectionery product has sufficient chocolate mild taste. Since the base food per se is hollow, the center cavity enhances the light eating texture (crispy eating texture) intrinsic to the base food. Therefore, the chocolate-impregnated confectionery product has the light eating texture (crispy eating texture) as well as the mild taste (chocolate taste).

According to the inventive aspect of claim 1, the hollow percentage is in the range of 7 to 30 % and, therefore, the chocolate-impregnated confectionery product advantageously has the light eating texture (crispy eating texture) intrinsic to the base food as well as the mild taste (chocolate taste) even with the chocolate infiltrated in the base food. If the hollow percentage is less than 7 %, the cavity is substantially filled with the chocolate, failing to provide the light eating texture intrinsic to the base food. If the hollow percentage is greater than 30 %, the cavity is mostly left unfilled with the chocolate, failing to provide the chocolate mild taste (chocolate taste).

According to the inventive aspect of claim 2, the hollow base food is the hollow puffed cereal. Therefore, the hollow puffed cereal can be properly impregnated with the chocolate. Thus, the chocolate-impregnated confectionery product has the crispy eating texture as well as the chocolate taste.

### BRIEF DESCRIPTION OF DRAWINGS

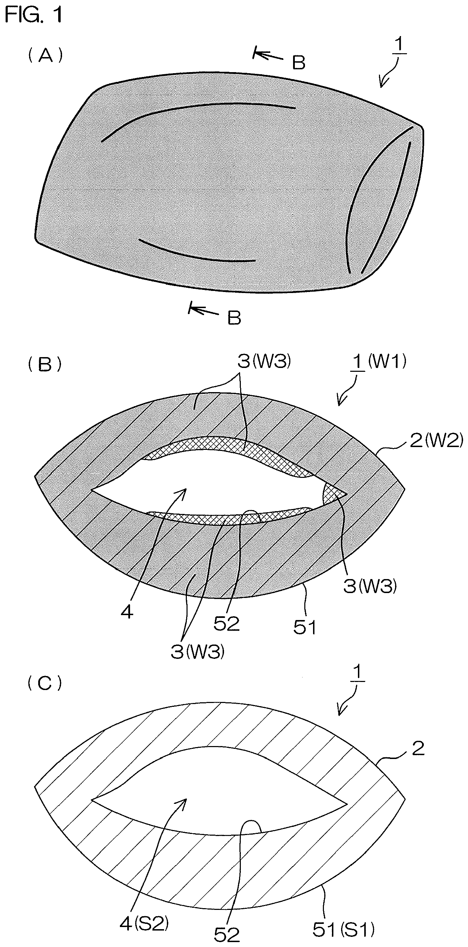

FIGS. 1A to 1C are diagrams for explaining a chocolate-impregnated confectionery product 1 according to one embodiment of the present invention, particularly, FIG. 1A being an external view, FIG. 1B being a sectional view of a center portion of the confectionery product taken along a line B-B in FIG. 1A, FIG. 1C being a diagram showing a state before impregnation with chocolate as shown in FIG. 1B.

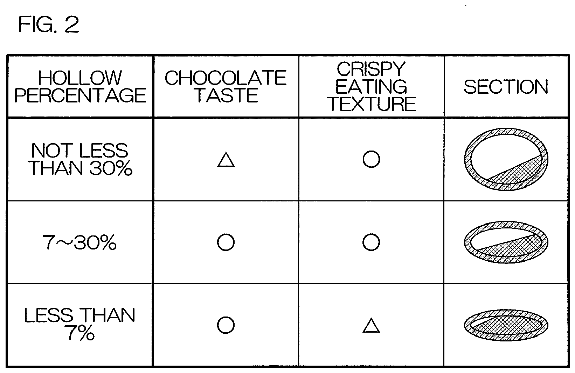

FIG. 2 is a diagram showing the results (evaluation results) of an organoleptic test performed on chocolate-impregnated confectionery products (hollow confectionery products) 1 respectively including hollow base foods, as shown in FIG. 1C, having different hollow percentages S0 (i.e., with cavities 4 thereof occupying different percentages of the hollow base foods) after the impregnation with the chocolate.

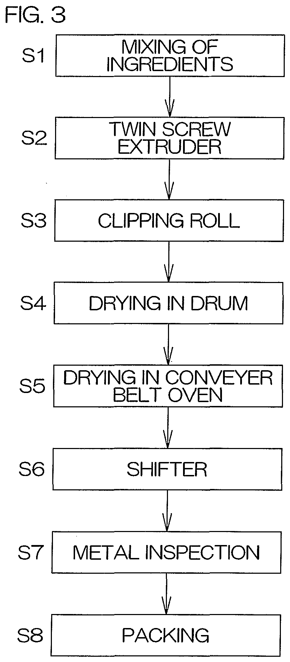

FIG. 3 is a flow chart of a production process for producing a puffed cereal 2 as a hollow cereal for the chocolate-impregnated confectionery product (hollow confectionery product) 1 according to the embodiment of the present invention.

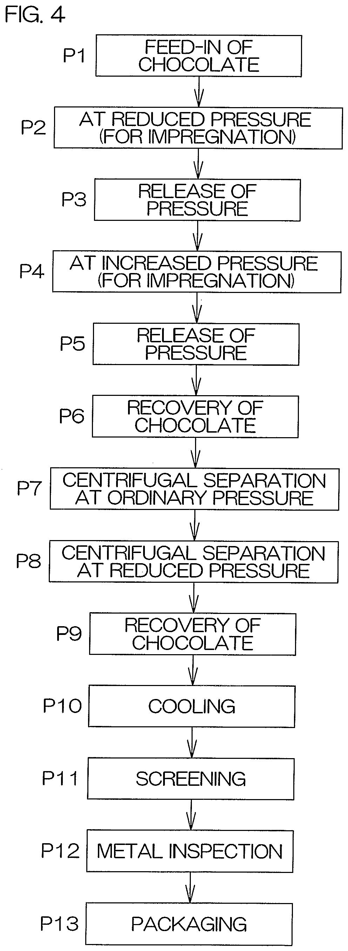

FIG. 4 is a flow chart of a chocolate impregnating process for impregnating the hollow puffed cereal 2 with chocolate 3.

### DESCRIPTION OF EMBODIMENT

Referring to the attached drawings, embodiments of the present invention will hereinafter be described specifically.

FIGS. 1A to 1C are diagrams for explaining a chocolate-impregnated confectionery product 1 according to one embodiment of the present invention. Particularly, FIG. 1A is an external view, and FIG. 1B is a sectional view of a center portion of the confectionery product taken along a line B-B in FIG. 1A. FIG. 1C is a diagram showing a state before impregnation with chocolate as shown in FIG. 1B.

The chocolate-impregnated confectionery product (hollow confectionery product) 1 includes a puffed cereal 2 (hollow base food or confectionery base) having a cavity 4, and chocolate 3 infiltrated in the puffed cereal 2. The section of the chocolate-impregnated confectionery product 1 taken along a center line B-B in FIG. 1A is shown in FIG. 1B. The puffed cereal 2 shown in FIG. 1C is yet to be impregnated with the chocolate.

In FIG. 1C, the ratio (hollow percentage) S0=(S2/S1) of the area S2 of the center cavity 4 to the area S1 of the entire section surrounded by an outer peripheral edge 51 of the section is 7 to 30 %. More preferably, the hollow percentage S0 is 9 to 17 %.

It is herein assumed that the weight of the overall chocolate-impregnated confectionery product (hollow confectionery product) 1 is W1, the weight of the puffed cereal 2 is W2, and the weight of the chocolate 3 infiltrated in the puffed cereal 2 is W3. Then, the ratio W0=(W3/W1) of the weight W3 of the chocolate 3 to the weight W1 (=W2+W3) of the overall confectionery product is 70 to 80 %.

The hollow percentage S0 of the puffed cereal 2 for the chocolate-impregnated confectionery product (hollow confectionery product) 1 before the impregnation with the chocolate is set to 7 to 30 % and the weight ratio W0 of the chocolate infiltrated in the puffed cereal 2 is set to the aforementioned ratio. Thus, as shown in FIG. 1B, the puffed cereal 2 is sufficiently impregnated with the chocolate 3 with crust thereof partly left unimpregnated, and the chocolate 3 penetrates into the cavity 4 through an inner peripheral surface 52 of the puffed cereal 2 to locally deposit on the inner peripheral surface 52. Further, the cavity 4 is infused with the chocolate 3 to some extent.

With this balance, the chocolate-impregnated confectionery product sufficiently has the mild taste of the chocolate 3. At the same time, left space part of the cavity 4 infused with the chocolate 3 enhances the crispy eating texture of the overall confectionery product. Thus, the light eating texture intrinsic to the puffed cereal 2 (confectionery base) can be provided. Therefore, the chocolate-impregnated confectionery product has the light eating texture as well as the chocolate mild taste. With a hollow percentage S0 of 9 to 17 %, the confectionery product has a more excellent balance between the light eating texture and the chocolate mild taste.

Table 1 is an evaluation table to be filled when an organoleptic test is performed on a chocolate-impregnated confectionery product (hollow confectionery product) 1 according to the embodiment of the present invention.

**Table 1**

| | (Lower level) | | | (Higher level) | | | |
|---|---|---|---|---|---|---|---|
| | -3 | -2 | -1 | 0 | 1 | 2 | 3 |
| Crispy easting texture | | | | | | | |
| Chocolate taste | | | | | | | |
| Moist eating texture | | | | | | | |
| | -3 | -2 | -1 | 0 | 1 | 2 | 3 |
| | (Lower level) | | | (Higher level) | | | |

With the use of the evaluation table shown in Table 1, the organoleptic test was performed to evaluate the chocolate-impregnated confectionery product (hollow confectionery product) 1 by 25 panel members.

The chocolate-impregnated confectionery product was rated on a scale of -3 (lowest level) to +3 (highest level) (on a seven-level scale) in the following three categories: (1) crispy eating texture; (2) chocolate taste; and (3) moist eating texture.

For comparative organoleptic evaluation, four types of commercially available chocolate confectionery products were rated in the same manner. Chocolate confectionery products A and B commercially available from M Company and chocolate confectionery products C and D commercially available from the inventor's company were employed for the comparative evaluation.

The results of the evaluation in the three categories were expressed by average scores for: (1) crispy eating texture; (2) chocolate taste; and (3) moist eating texture. Further, a significance test was performed to check if differences between the average scores are significant. The results of the evaluation and the results of the significance test are shown in Tables 2, 3 and 4. In the significance test, the variance analysis was first performed, and then the Tukey's multiple comparison test was performed as a sub-effect test with the use of Excel Statistics ver. 6.0.

**Table 2 (Crispy eating texture)**

| Sample name | Average score |
|---|---|
| Inventive product | 1.5 |
| Product A | 0.4 ** |
| Product B | 2.1 |
| Product C | -0.2 ** |
| Product D | 1.7 |

| | |
|---|---|
| **: With a difference with a significance level of 1 % as the result of the significance test performed on the inventive product and the commercially available products. | |

**Table 3 (Chocolate taste)**

| Sample name | Average score |
|---|---|
| Inventive product | 1.8 |
| Product A | 1.1 * |
| Product B | 0.8 ** |
| Product C | 1.5 |
| Product D | -1.1 ** |

| | |
|---|---|
| *, **: With differences with significance levels of 5 % and 1 %, respectively, as the result of the significance test performed on the inventive product and the commercially available products. | |

**Table 4 (Moist eating texture)**

| Sample name | Average score |
|---|---|
| Inventive product | 0.8 |
| Product A | 1.3 |
| Product B | -0.7 ** |
| Product C | 1.0 |
| Product D | -1.8 ** |

| | |
|---|---|
| **: With a difference with a significance level of 1 % as the result of the significance test performed on the inventive product and the commercially available products. | |

In the organoleptic evaluation, as shown in Table 2, the inventive chocolate-impregnated confectionery product (hollow confectionery product) 1, and the products B and D gained 1.5 points, 2.1 points and 1.7 points, respectively, in crispy eating texture. The score of the inventive chocolate-impregnated confectionery product (hollow confectionery product) 1 was significantly higher than the scores of the products A and C. There were no significant differences between the inventive chocolate-impregnated confectionery product (hollow confectionery product) 1 and the product B and between the inventive chocolate-impregnated confectionery product (hollow confectionery product) 1 and the product D.

On the other hand, as shown in Table 3, the chocolate-impregnated confectionery product (hollow confectionery product) 1 according to the embodiment of the present invention gained the highest score (1.8 points), and the product C gained the second highest score (1.5 points) in chocolate taste. The score of the inventive chocolate-impregnated confectionery product (hollow confectionery product) 1 was significantly higher than the scores of the commercially available products except for the product C. In chocolate taste, the products B and D, which each gained a higher score in crispy eating texture, gained 0.8 points and -1.1 points, respectively, which were significantly lower than the score of the inventive chocolate-impregnated confectionery product (hollow confectionery product) 1.

In moist eating texture, as shown in Table 4, none of the products gained a high score. The score of the product A was the highest (1.3 points), and the scores of the other products including the chocolate-impregnated confectionery product (hollow confectionery product) 1 according to the embodiment of the present invention were not more than 1 point. In moist eating texture, the products B and D, which each gained a higher score in crispy eating texture, gained -0.7 points and -1.8 points, respectively, which were significantly lower than the score of the inventive chocolate-impregnated confectionery product (hollow confectionery product) 1.

The organoleptic evaluation indicates that the chocolate-impregnated confectionery product (hollow confectionery product) 1 according to the embodiment of the present invention is excellent in both the crispy eating texture and the chocolate taste.

FIG. 2 is a diagram showing the results (evaluation results) of an organoleptic test performed on chocolate-impregnated confectionery products (hollow confectionery products) 1 respectively including hollow base foods, as shown in FIG. 1C, having different hollow percentages S0 (i.e., with cavities 4 thereof occupying different percentages of the hollow base foods) after the impregnation with the chocolate.

As shown in FIG. 2, it was confirmed that, where the hollow base food for the chocolate-impregnated confectionery product has a hollow percentage S0 of higher than 30 %, the chocolate-impregnated confectionery product is excellent in crispy eating texture (light eating texture) but poorer in chocolate mild taste (chocolate taste). It was also confirmed that, where the hollow base food has a hollow percentage S0 of less than 7 %, on the other hand, the chocolate-impregnated confectionery product is poorer in crispy eating texture with the cavity 4 of the hollow base food being substantially filled with the chocolate.

FIG. 3 is a flow chart of a production process for producing the puffed cereal 2 as a hollow cereal for the chocolate-impregnated confectionery product (hollow confectionery product) 1 according to the embodiment of the present invention. The cereal producing process for producing the puffed cereal 2 will hereinafter be described briefly.

Various types of cereal grains, granulated sugar and sodium bicarbonate are mixed together as ingredients (which will be described later more specifically) by a mixer (Step S1), and the resulting ingredient mixture is fed into a twin screw extruder. While water is added to the ingredient mixture, the resulting dough is kneaded to be extruded by a screw. A nozzle having a ring opening and a closed center portion is provided at a distal end of the extruder. The dough extruded by the screw is ejected from the nozzle by pressure. By thus ejecting the dough from the nozzle by pressure, the dough is puffed in a tubular shape according to the shape of the nozzle (Step S2). The tubular puffed dough is cut to a predetermined size by a clipping roll (Step S3), whereby hollow puffed dough pieces are formed. Thereafter, the hollow puffed dough pieces are dried in a drum (Step S4) and then in a conveyer belt oven (Step S5), whereby hollow puffed cereals containing a predetermined amount of moisture are produced. After the drying, chipped or defective puffed cereals are screened out by a shifter (Step S6), and then metal inspection is carried out for prevention of metal contamination (Step S7). Then, the resulting hollow puffed cereals are packed in a case (Step S8).

FIG. 4 is a flow chart of a chocolate impregnating process for impregnating the hollow puffed cereal 2 with the chocolate 3.

In the chocolate impregnating process, a basket filled with the puffed cereals 2 is accommodated in a treatment vessel, which is in turn sealed. Then, the internal pressure of the treatment vessel is reduced. Chocolate 3 is fed into the treatment vessel from a tank by a pressure difference (Step P1), whereby the treatment vessel is sufficiently filled with the chocolate 3. After a lapse of a predetermined standby period (Step P2), the internal pressure of the vessel is returned to an ordinary pressure (Step P3). Then, the internal pressure of the vessel is increased by supplying gas into the vessel, whereby the puffed cereals 2 are impregnated with the chocolate 3 in a predetermined period (Step P4). Thus, the chocolate 3, infiltrated into the puffed cereals 2 by a pressure difference occurring when the pressure is returned from the reduced pressure level in Step P2 to the ordinary pressure level in Step P3, further penetrates into the puffed cereals 2 to reach the cavities 4. After the internal pressure of the vessel is released (Step P5), excess chocolate not infiltrated into the puffed cereals 2 is recovered (Step P6). Further, the basket containing the puffed cereals 2 is rotated in the treatment vessel, whereby excess chocolate adhering to surfaces of the puffed cereals 2 is centrifugally separated (Step P7). Thereafter, excess chocolate is further centrifugally separated at a reduced pressure (Step P8), whereby chocolate not completely removed by the ordinary-pressure centrifugal separation is removed. The excess chocolate thus centrifugally separated is removed (Step P9), and the chocolate impregnating process ends. Subsequently, the puffed cereals 2 impregnated with the chocolate 3 in the treatment vessel are fed into a cooling tunnel by a belt conveyer to be thereby cooled. Thus, the chocolate 3 is cooled to be solidified (Step P10). Thereafter, defective products are screened out (Step P11), and metal inspection is carried out for prevention of metal contamination (Step P12). Then, the resulting products are packaged in a package prepared in conformity with product specifications (Step P13).

### EXAMPLES

Specific examples of ingredient formulations for the chocolate-impregnated confectionery product (hollow confectionery product) 1 according to the embodiment described above are as follows:

**Table 5 (Hollow cereal)**

| Ingredients | Blend ratio |
|---|---|
| Oat flour | 7.0 |
| Corn flour | 28.0 |
| Corn grit | 20.0 |
| Wheat flour | 18.0 |
| Granulated sugar | 16.0 |
| Sodium bicarbonate | 0.5 |

**Table 6 (Chocolate)**

| Ingredients | Blend ratio |
|---|---|
| Cacao mass | 20.0 |
| Whole milk powder | 18.0 |
| Cocoa butter | 13.0 |
| Vegetable fats and oils | 14.0 |
| Sugar | 35.0 |
| Emulsifier | Less than 0.5 |
| Flavoring agent | Less than 0.5 |

An ingredient formulation for the puffed cereal is shown in Table 5.

In this example, the puffed cereal is produced by mixing oat flour, corn flour, corn grit, wheat flour, granulated sugar and sodium bicarbonate, and kneading the resulting ingredient mixture while adding water to the mixture.

An ingredient formulation for the chocolate according to the example is shown in Table 6.

It is noted that the aforementioned ingredient formulations for the hollow puffed cereal and the chocolate are merely illustrative and other various ingredient formulations may be employed for the production of the inventive chocolate-impregnated confectionery product (hollow confectionery product).

Various modifications may be made within the scope of the present invention defined by the appended claims.

### INDUSTRIAL APPLICABILITY

According to the present invention, a confectionery product is provided which has two eating textures including the mild taste of the chocolate as well as the crispy eating texture (light eating texture) of the confectionery base (snack). The present invention increasingly stimulates the chocolate confectionery market.

### DESCRIPTION OF REFERENCE CHARACTERS

1: Chocolate-impregnated confectionery product (hollow confectionery product)
2: Puffed cereal
3: Chocolate
4: Cavity
51: Outer peripheral edge
52: Inner peripheral surface
S1: Area of overall section
S2: Area of cavity
S0: Hollow percentage
W1: Weight of overall chocolate-impregnated confectionery product
W2: Weight of puffed cereal
W3: Weight of chocolate
W0: Weight ratio of chocolate to overall confectionery product

## Claims

1. A chocolate-impregnated confectionery product (1), comprising a hollow base food (2) and chocolate (3) infiltrated in the hollow base food (2), wherein the chocolate (3) is present in a weight percentage of 70 to 80 wt% of a weight of the confectionery product (1), wherein the hollow base food (2) has a hollow percentage of 7 to 30 %, which is defined as a ratio of an area (S2) of a cavity (4) of the hollow base food (2) to an area (S1) of an overall section taken by cutting a center portion of the hollow base food (2) and surrounded by an outer peripheral edge (51) of the section.

2. The chocolate-impregnated confectionery product according to claim 1, wherein the hollow base food (2) is a hollow puffed cereal.

## Patentansprüche

1. Schokolade-getränktes Süßwarenprodukt (1) mit einem hohlen Basisnahrungsmittel (2) und mit Schokolade (3), die in das hohle Basisnahrungsmittel (2) eingedrungen ist, wobei die Schokolade (3) in einem Gewichtsprozentanteil von 70 - 80 Gew-% eines Gewichtes des Süßwarenproduktes (1) vorhanden ist, wobei das hohle Basisnahrungsmittel (2) einen Hohl-Prozentsatz von 7 - 30 % hat, der definiert ist als ein Verhältnis eines Bereiches (S2) eines Hohlraumes (4) des hohlen Basisnahrungsmittels (2) zu einem Bereich (S1) eines Gesamtschnittes, der vorgenommen ist durch Schneiden eines mittleren Abschnittes des hohlen Basisnahrungsmittels (2), und umgeben von einem äußeren Umfangsrand (51) des Schnittes.

2. Schokolade-getränktes Süßwarenprodukt nach Anspruch 1, wobei das hohle Basisnahrungsmittel (2) eine hohle Puffcerealie ist.

## Revendications

1. Produit de confiserie imprégné de chocolat (1), comprenant un aliment à base creuse (2) et du chocolat (3) infiltré dans l'aliment à base creuse (2), où le chocolat (3) est présent selon un pourcentage pondéral allant de 70 à 80% en poids d'un poids du produit de confiserie (1), où l'aliment à base creuse (2) possède un pourcentage de creux allant de 7 à 30%, qui est défini comme un rapport d'une surface (S2) d'une cavité (4) de l'aliment à base creuse (2) à une surface (S1) d'une section globale prise en découpant une portion centrale de l'aliment à base creuse (2) et entourée par un bord périphérique externe (51) de la section.

2. Produit de confiserie imprégné de chocolat selon la revendication 1, dans lequel l'aliment à base creuse (2) est une céréale soufflée creuse.
